# FASCICULE DE BREVET EUROPEEN

(11) **EP 3 426 584 B1**
(45) Date de publication et mention de la délivrance du brevet: **09.10.2019**
(21) Numéro de dépôt: 17709585.8
(22) Date de dépôt: 09.03.2017
(51) Int. Cl.: B65H 29/04, B65G 23/44

(54) **TENDEUR DE CHAINES, MACHINE DE TRAITEMENT D'ELEMENTS EN FORME DE FEUILLES CORESPONDANT ET PROCÉDÉ POUR TENDRE LES TRAINS DE CHAINES CORRESPONDANTE**
KETTENSPANNER, MASCHINE ZUR VERARBEITUNG VON BLATTFÖRMIGEN ELEMENTEN UND VERFAHREN ZUM SPANNEN DER KETTENSÄTZE
CHAIN TENSIONER, CORRESPONDING MACHINE FOR PROCESSING SHEET-FORM ELEMENTS, AND CORRESPONDING METHOD FOR TENSIONING THE SETS OF CHAINS

(30) Priorité: 09.03.2016 EP 16020071
(43) Date de publication de la demande: 16.01.2019
(73) Titulaire: BOBST MEX SA, 1031 Mex (CH)
(72) Inventeur: RUCHET, Christophe, 1028 Préverenges (CH)
(74) Mandataire: Wagner, Sigrid
(86) Numéro de dépôt international: PCT/EP2017/025044
(87) Numéro de publication internationale: WO 2017/153055

(56) Documents cités:
- WO-A1-2012/038035
- DE-A1- 3 723 039
- US-A- 2 949 297

## Description

La présente invention concerne un tendeur de chaînes pour dispositif de transport de machine de traitement d'éléments en forme de feuilles, une machine de traitement d'éléments en forme de feuilles et un procédé pour tendre les trains de chaînes du dispositif de transport.

Une machine de traitement d'éléments en forme de feuilles, par exemple de feuilles de papier ou de carton pour la fabrication d'emballages, comprend une succession de stations de travail pour effectuer une transformation des feuilles, notamment au moyen d'une presse à platines. Ce type de machines étant automatisé, des moyens de transport sont prévus pour amener chaque feuille successivement dans chacun des postes de travail. Dans la pratique, il s'agit habituellement d'une série de barres transversales munies de pinces. Ces barres transversales, communément appelées barres de pinces, viennent chacune à leur tour saisir une feuille au niveau de son bord frontal, avant de la tirer successivement dans les différents postes de travail de la machine. Les extrémités des barres de pinces sont chacune reliées respectivement à une chaîne latérale formant une boucle, communément appelée train de chaînes. Grâce à un mouvement transmis aux trains de chaînes, l'ensemble des barres de pinces va partir d'une position arrêtée, accélérer, atteindre une vitesse maximale, décélérer, puis s'arrêter, en décrivant ainsi un cycle d'accélération et de vitesse correspondant au déplacement d'une feuille d'un poste de travail au poste de travail suivant. Chaque station effectue son travail en synchronisme avec ce cycle que l'on appelle communément cycle machine.

Des phénomènes de vibrations se produisent le long des trains de chaînes et perturbent leur comportement dynamique. Afin de limiter ces phénomènes de vibrations, des ressorts sont utilisés afin de servir de tendeurs pour les trains de chaînes, en appliquant une force sur un dispositif de guidage en contact avec la chaîne, le dispositif de guidage pouvant notamment comporter une poulie, des roues dentées ou de simples guides.

Avec l'augmentation des cadences des machines, les barres de pinces et les trains de chaînes sont soumis à des contraintes mécaniques de plus en plus élevées, et doivent donc être de plus en plus résistants. Les phénomènes vibratoires sont également plus violents, et imposent l'utilisation de ressorts plus puissants qui exercent des tensions plus importantes, ce qui augmente d'autant les contraintes mécaniques sur les trains de chaînes, en réduisant leur durée d'utilisation et en augmentant les risques de panne ou de casse. Il faut alors renforcer les trains de chaînes, donc augmenter la puissance des éléments moteurs et de freinage qui vont les accélérer et les ralentir au cours de chaque cycle.

Le document WO2012/038035 décrit un tendeur de chaînes amélioré comprenant au moins un organe moteur apte à générer une force variable dont l'intensité est fonction de la cadence instantanée de la machine, la force variable étant appliquée sur au moins un des dispositifs de guidage de chaînes. Ce tendeur dynamique adapte ainsi la force appliquée sur le dispositif de guidage en permanence en fonction de l'angle machine et de la cadence de la machine. Comme les vibrations le long des trains de chaînes augmentent en fonction de la cadence de la machine, la tension peut donc ainsi être ajustée en conséquence. Une force variable de poussée dans les trains de chaînes en fonction de l'angle machine et de la cadence instantanée de la machine permet de lutter efficacement contre les phénomènes vibratoires tout en limitant les contraintes sur les trains de chaînes. Ceci permet de ralentir fortement leur usure et d'augmenter sensiblement leur durée de vie.

Un des buts de la présente invention est de proposer un tendeur de chaînes dynamique amélioré, plus robuste, plus compact, moins couteux et/ou plus simple à agencer que celui de l'état de la technique, pour mieux contrôler la tension des trains de chaînes.

A cet effet, la présente invention a pour objet un tendeur de chaînes pour dispositif de transport de machine de traitement d'éléments en forme de feuilles, ledit dispositif de transport comprenant deux trains de chaînes latéraux reliés aux extrémités d'une pluralité de barres de pinces transversales aptes à saisir les éléments en forme de feuilles et au moins un dispositif de guidage de chaînes configuré pour guider un train de chaînes respectif, caractérisé en ce que le tendeur de chaînes comporte :
- un actionneur configuré pour être piloté par une unité de contrôle de la machine de traitement,
- un support mobile,
- un élément de transmission porté par le support mobile,
- un élément rotatif configuré pour être entrainé en rotation par l'actionneur et pour coopérer avec l'élément de transmission pour exercer une force de poussée sur le support mobile, l'élément mobile étant mobile en rotation sur une plage angulaire inférieure à 360° entre une première position angulaire extrémale et une deuxième position angulaire extrémale, la tension du train de chaînes étant minimale pour la première position angulaire extrémale et maximale pour la deuxième position angulaire extrémale, l'actionneur étant piloté en synchronisme avec l'angle machine.

Le tendeur de chaînes permet ainsi de faire varier la tension des trains de chaînes en fonction de l'angle machine, ce qui permet de compenser les vibrations des trains de chaînes en fonction des besoins, notamment en fonction des phases d'accélération et de décélérations des trains de chaînes. Cela permet d'allonger fortement la durée de vie des trains de chaînes en réduisant leur usure. Le tendeur de chaînes permet ainsi de garantir la précision du positionnement des barres de pinces tout au long du cycle machine. Il est en outre plus robuste et plus compact que les systèmes à courroies de l'art antérieur.

Selon une ou plusieurs caractéristiques du tendeur de chaînes, prise seule ou en combinaison,
- l'élément de transmission est un galet de came monté rotatif sur le support mobile et l'élément rotatif est une came, la came présentant une surface de came configurée pour coopérer avec le galet de came, la surface de came présentant une forme de volute dont le rayon augmente entre la première position angulaire extrémale et la deuxième position angulaire extrémale,
- l'élément de transmission porté par le support mobile est une bielle, une extrémité de la bielle étant montée pivotante sur le support mobile et l'autre extrémité de la bielle étant montée pivotante sur l'élément rotatif,
- la position angulaire de l'élément rotatif est contrôlée également en fonction de la cadence machine,
- l'unité de contrôle est configurée pour définir le positionnement d'un angle de fonctionnement à l'intérieur de la plage angulaire pour tenir compte de paramètres environnementaux des trains de chaînes,
- l'actionneur est configuré pour être commandé en courant,
- l'élément rotatif est en prise directe avec un arbre moteur de l'actionneur,
- un angle de fonctionnement de l'élément rotatif sur lequel l'élément rotatif coopère avec l'élément de transmission sur un cycle machine est supérieur à 0° et inférieur à 100°,
- le support mobile comporte un balancier mobile en pivotement, configuré pour s'articuler avec le dispositif de guidage de chaînes,
- le balancier comporte :
   - une barrette,
   - un pivot configuré pour être fixé à un bâti de la machine de traitement et sur lequel est monté une première extrémité de la barrette,
   - une rotule configurée pour coopérer avec le dispositif de guidage de chaînes et une deuxième extrémité de la barrette,
   - une tête fixée à la barrette, l'élément de transmission étant monté mobile dans une extrémité de la tête,
- le support mobile comporte un chariot mobile en translation,
- le tendeur de chaînes comprend également au moins un dispositif de rappel configuré pour appliquer au dispositif de guidage de chaînes une force de poussée sensiblement constante.

L'invention a aussi pour objet une machine de traitement d'éléments en forme de feuilles, comprenant
- une pluralité de stations de travail,
- un dispositif de transport pour transporter chaque feuille successivement dans différentes stations de travail, ledit dispositif de transport comprenant :
   - une pluralité de barres de pinces transversales, aptes à saisir les feuilles par leurs bords frontaux,
   - un premier et un deuxième trains de chaînes latéraux reliés aux extrémités des barres de pinces,
   - au moins un dispositif de guidage de chaînes configuré pour guider un train de chaînes respectif,
   caractérisée en ce que la machine de traitement comporte au moins un tendeur de chaînes tel que décrit précédemment configuré pour tendre au moins un train de chaînes.

La machine de traitement peut comporter deux tendeurs de chaînes pour tendre un train de chaînes respectif.

L'invention a encore pour objet un procédé pour tendre les trains de chaînes d'un dispositif de transport d'une machine de traitement d'éléments en forme de feuilles par au moins un tendeur de chaînes tel que décrit précédemment, dans lequel on commande la position angulaire de l'élément rotatif en synchronisme avec l'angle machine, la rotation dans un sens augmentant la tension du train de chaînes et la rotation dans le sens de rotation contraire diminuant la tension du train de chaînes.

Selon une ou plusieurs caractéristiques du procédé, prise seule ou en combinaison,
- on commande un moteur de l'actionneur en courant ou en position,
- on commande l'actionneur également en fonction de la cadence machine,
- le positionnement d'un angle de fonctionnement à l'intérieur de la plage angulaire est défini pour tenir compte de paramètres environnementaux des trains de chaînes,
- on commence à commander la position angulaire de l'élément rotatif en synchronisme avec l'angle machine uniquement lorsque la cadence machine est supérieure à un seuil de cadence machine,
- on commande la position angulaire de l'élément rotatif dans une position désengagée de l'élément de transmission pour appliquer uniquement au dispositif de guidage de chaînes une force de poussée sensiblement constante d'un dispositif de rappel.

### DESCRIPTION SOMMAIRE DES DESSINS

D'autres avantages et caractéristiques apparaîtront à la lecture de la description de l'invention, ainsi que sur les figures annexées qui représentent un exemple de réalisation non limitatif de l'invention et sur lesquelles :
La figure 1 illustre de façon très schématique un premier exemple de machine de traitement d'éléments en forme de feuilles.
La figure 2 illustre de façon très schématique un deuxième exemple de machine de traitement d'éléments à feuilles.
La figure 3 est une vue schématique d'un dispositif de transport d'une machine de traitement d'éléments en forme de feuilles.
La figure 4 montre une vue schématique de côté d'un premier exemple de tendeur de chaînes, monté sur un dispositif de guidage de chaînes.
La figure 5 montre une vue schématique partielle en coupe du tendeur de chaînes et du dispositif de guidage de chaines de la figure 4.
La figure 6a montre des éléments du tendeur de chaînes de la figure 4, pour une première position angulaire de la came.
La figure 6b montre les éléments de la figure 6a, après rotation en sens antihoraire de la came, pour une deuxième position angulaire de la came.
La figure 6c montre les éléments de la figure 6a, pour une première position angulaire de la came, décalée par rapport à la position de la figure 6a.
La figure 6d montre les éléments de la figure 6c, après rotation en sens antihoraire de la came dans une deuxième position angulaire de la came, décalée par rapport à la position de la figure 6b.
La figure 7 est un graphique montrant trois évolutions de la course de déplacement d'un dispositif de guidage de chaînes (ordonnée de gauche) pour trois cadences machines différentes (7000f/h (pour feuilles/heure), 9000f/h et 11000f/h) et trois courbes (courbes A', B', C') montrant les évolutions correspondantes de la force de poussée (ordonnée de droite) au cours d'un cycle machine (l'angle machine AM est donc l'abscisse qui varie de 0° à 360°).
La figure 8 est un graphique montrant la course du dispositif de guidage des chaînes au cours d'un cycle machine d'une part, pour une cadence machine minimale et un train de chaînes neuf (courbe D) et d'autre part, pour une cadence maximale et un train de chaînes usé (courbe E).
La figure 9a montre une vue schématique de côté d'un deuxième exemple de tendeur de chaînes, monté sur un dispositif de guidage de chaînes.
La figure 9b montre les éléments de la figure 9a, après rotation de l'élément rotatif, pour une deuxième position angulaire.
La figure 10a montre des éléments d'un autre exemple de tendeur de chaînes pour une première position angulaire de l'élément rotatif.
La figure 10b montre les éléments de la figure 10a, après rotation de l'élément rotatif, pour une deuxième position angulaire.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

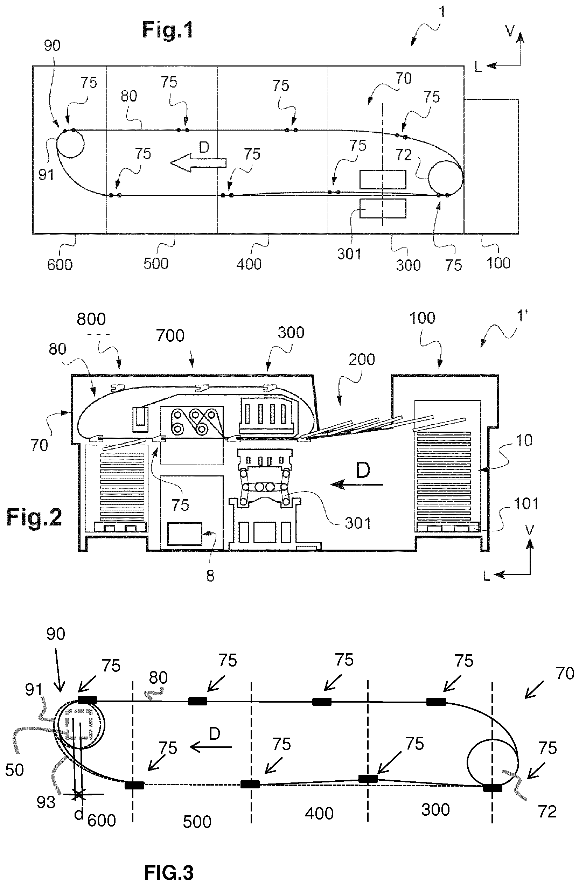

On définit les termes amont et aval en référence au sens de déplacement des éléments en plaque 10, tel qu'illustré par la flèche D dans les Figures 1, 2, 3. Ces éléments se déplacent d'amont en aval, en suivant généralement l'axe principal longitudinal de la machine, dans un mouvement cadencé par des arrêts périodiques. Le terme "transversal" désigne ici une direction horizontale et perpendiculaire à l'axe machine longitudinal.

Les termes « éléments plats » et « feuilles » seront considérés comme équivalents, et concerneront aussi bien des éléments composés de carton ondulé que de carton plat, de papier ou de toute autre matière utilisée couramment dans l'industrie de l'emballage. Il est entendu que dans l'ensemble de ce texte, les termes « feuille » ou « élément en feuilles » ou « élément en forme de feuilles » désignent de façon très générale tout support d'impression en forme de feuilles tel que, par exemple, des feuilles de carton, de papier, de matière plastique, etc.

La figure 1 représente un premier exemple de machine de traitement 1 pour la transformation de feuilles. Cette machine de traitement 1 est classiquement composée de plusieurs stations de travail qui sont juxtaposées mais interdépendantes une à une pour former un ensemble unitaire. On trouve ainsi une station d'introduction 100, une station de transformation 300 comprenant par exemple une presse à platines 301, une station d'éjection des déchets 400 une station de séparation des poses 500 où les feuilles 10 transformées sont reconditionnées en pile et une station d'évacuation des déchets 600 où les déchets de feuilles découpées sont évacués à la volée.

L'opération de transformation de chaque feuille 10 s'opère dans la station de transformation 300, par exemple entre une platine fixe et une platine montée mobile inférieure de la presse 301 pour la découpe des feuilles selon une matrice correspondant à la forme développée que l'on souhaite obtenir, par exemple en vue d'obtenir une pluralité de boîtes d'une forme donnée. La platine mobile s'élève et s'abaisse successivement une fois au cours de chaque cycle machine.

Un dispositif de transport 70 est par ailleurs prévu pour déplacer individuellement chaque feuille 10 depuis la sortie de la station d'introduction 100 jusqu'à la station d'évacuation des déchets 600, en passant par la station de transformation 300 par presse.

Le dispositif de transport 70 comporte une pluralité de barres transversales munies de pinces, communément appelées barres de pinces 75 qui viennent chacune à leur tour saisir une feuille au niveau de son bord frontal, avant de la tirer successivement dans les différents postes des stations 300, 400, 500, 600 de la machine 1.

Les extrémités des barres de pinces 75 sont chacune reliées respectivement à une chaîne latérale formant une boucle, communément appelée train de chaînes 80. Deux trains de chaînes 80 sont ainsi disposés latéralement de chaque côté des barres de pinces 75.

Le dispositif de transport 70 comporte également au moins un dispositif de guidage de chaînes 90 configuré pour guider un train de chaînes 80 respectif.

Grâce à un mouvement transmis aux trains de chaînes 80 au niveau de roues menantes 72, l'ensemble des barres de pinces 75 va partir d'une position arrêtée, accélérer, atteindre une vitesse maximale, décélérer, puis s'arrêter, en décrivant ainsi un cycle correspondant au déplacement d'une feuille d'une station de travail à la station de travail suivant. Les trains de chaînes 80 se déplacent et s'arrêtent périodiquement de sorte que, durant chaque déplacement, toutes les barres de pinces 75 sont passées d'une station à la station de travail aval adjacente. Chaque station effectue son travail en synchronisme avec ce cycle que l'on appelle communément cycle machine. Les stations de travail sont en position initiale pour démarrer un nouveau travail à chaque début de cycle machine. Les déplacements, accélérations, vitesses, forces, sont souvent définis par une courbe correspondant à un cycle machine avec une abscisse variant entre de 0° à 360°. Une abscisse sur ce genre de courbe est communément appelée angle machine (AM).

La figure 2 représente un autre exemple de machine de traitement 1' pour la transformation des feuilles, appelée machine d'estampage ou machine de dorure à chaud (« hot foil stamping » en anglais). Dans cet exemple, la station d'introduction 100 est approvisionnée par l'intermédiaire d'une palette 101 sur laquelle sont empilées une pluralité de feuilles 10, par exemple de carton. Ces dernières sont successivement enlevées au-dessus de la pile par un organe de préhension apte à les envoyer sur une table de marge 200 directement adjacente. Dans certaines machines, les feuilles sont enlevées du dessous de la pile.

Dans la station de transformation 300, on réalise entre les platines de la presse 301, la dépose sur chaque feuille 10, de motifs à partir d'un film issu d'une ou de plusieurs bandes à estamper provenant d'une station de chargement de bandes à estamper 700, telles que des bandes métallisées par exemple.

On comprend à travers ces deux exemples que le nombre et la nature des stations de traitement dans une machine de traitement 1, 1' peuvent varier en fonction de la nature et de la complexité des opérations à effectuer sur les feuilles 10. Dans le cadre de l'invention, la notion de machine de traitement couvre ainsi un très grand nombre de réalisations du fait de la structure modulaire de ces ensembles. Suivant le nombre, la nature et l'agencement des stations de travail utilisées, il est en effet possible d'obtenir une multitude de machines de traitement différentes. Il existe en outre d'autres types de stations de travail que celles évoquées. Enfin, il est entendu qu'une même machine de traitement peut très bien être équipée de plusieurs stations d'un même type.

On a schématisé des éléments d'un dispositif de transport 70 sur la figure 3. On distingue sur cette figure une pluralité de barres de pinces 75, huit dans l'exemple, permettant de déplacer les feuilles 10 dans les différents postes des stations 300, 400, 500, 600 de la machine 1, un train de chaînes 80 et un dispositif de guidage de chaînes 90. Les roues menantes 72 entrainant les trains de chaînes 80 en déplacement sont agencées à l'opposé des dispositifs de guidage de chaînes 90, à proximité de la table de marge 200 ou de la station d'introduction 100.

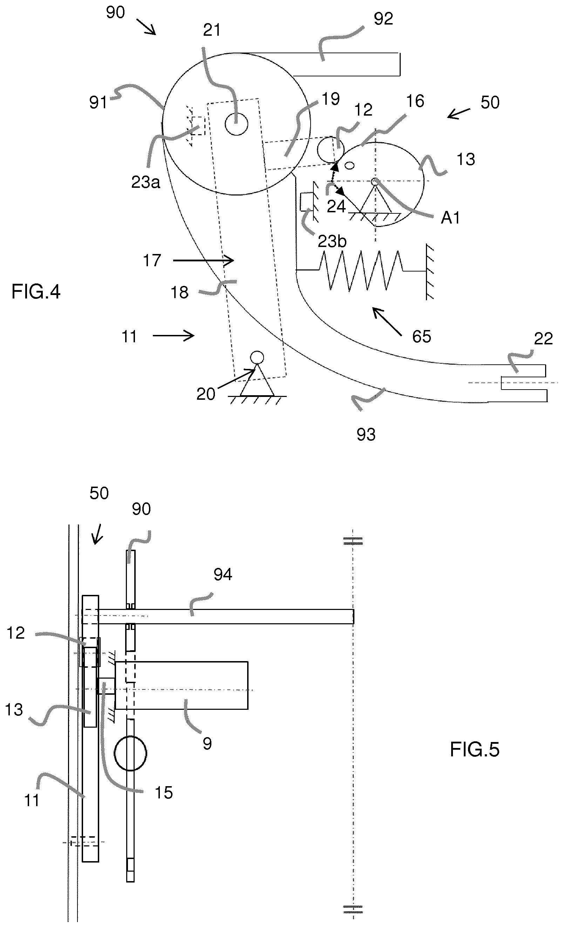

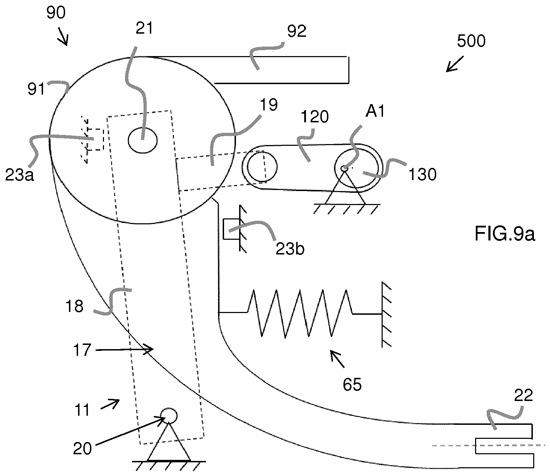

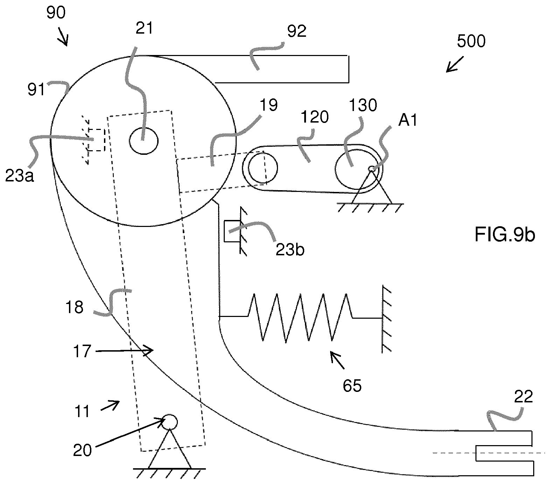

Comme on peut le voir plus précisément sur les figures 4 et 9, chaque dispositif de guidage de chaînes 90 comporte par exemple une poulie 91, un guide chaine supérieur 92 agencé de manière sensiblement horizontale dans la machine 1, pour guider le train de chaînes 80 en sortie de la poulie 91 et un guide chaine inférieur 93, présentant une forme courbe pour guider le train de chaînes 80 sur un virage de la boucle, vers la poulie 91. Les dispositifs de guidage de chaînes 90 peuvent être reliés entre eux par un arbre transversal 94 (voir figure 5).

Au moins un tendeur de chaînes 50 ; 500 est configuré pour appliquer une force de poussée sur un dispositif de guidage de chaînes 90 afin de tendre le train de chaînes 80 guidé par le dispositif de guidage 90.

La machine de traitement 1 ; 1' comporte par exemple deux tendeurs de chaînes 50 ; 500 pour tendre un train de chaînes 80 respectif. Cela permet de régler indépendamment les trains de chaînes 80. En effet, les longueurs des deux trains de chaînes 80 peuvent être différentes du fait de d'une tension ou d'un paramètre environnemental tel que la température, usure ou tolérances de fabrication, différent entre les côtés. Les deux tendeurs de chaînes 50 ; 500 sont par exemple montés en regard sur les côtés extérieurs des trains de chaînes 80.

Ce ou ces tendeurs de chaînes 50 ; 500 peuvent être placés indifféremment dans la machine de traitement 1 ; 1' le long du parcours des trains de chaînes 80. Sur l'exemple de la figure 3, le tendeur de chaînes 50 se situe au niveau de la station d'évacuation des déchets 600. Sur l'exemple de la figure 2, il se situe au niveau de la station de réception 800.

Le tendeur de chaînes 50 ; 500 comprend un actionneur 9, un support mobile 11, un élément de transmission 12 ; 120 porté par le support mobile 11 et un élément rotatif 13 ; 130 configuré pour être entrainé en rotation par l'actionneur 9 et pour coopérer avec l'élément de transmission 12 ; 120 pour exercer une force de poussée sur le support mobile 11.

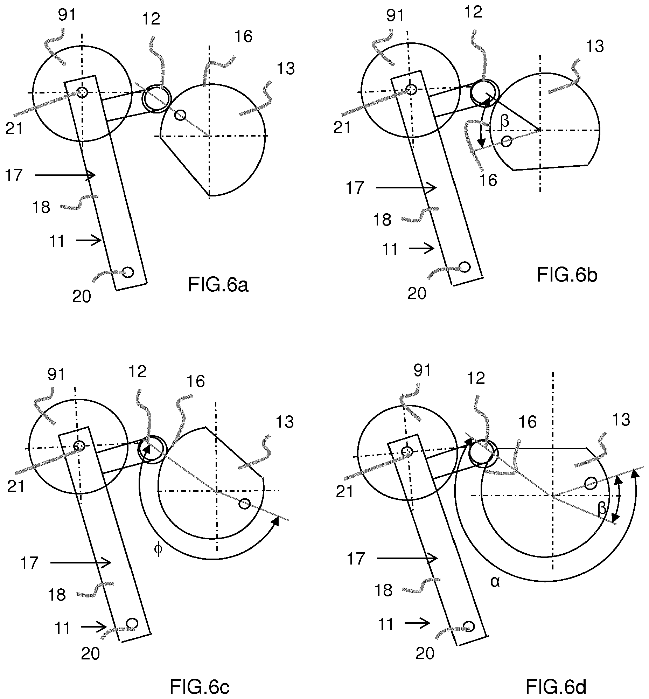

L'élément rotatif 13 ; 130 est mobile en rotation sur une plage angulaire α entre une première position angulaire extrémale (figure 6a ; 9a ; 10a) et une deuxième position angulaire extrémale (figure 6d ; 9b ; 10b), inférieure à 360°, telle qu'inférieure à 240°. La tension du train de chaines 80 est minimale pour la première position angulaire extrémale (figure 6a ; 9a ; 10a) et maximale pour la deuxième position angulaire extrémale (figure 6d ; 9b ; 10b).

L'actionneur 9 est configuré pour être commandé en synchronisme avec l'angle machine AM, par exemple par une unité de contrôle 8 de la machine de traitement 1, pour commander la position angulaire de l'élément rotatif 13 ; 130 en synchronisme avec l'angle machine.

On produit ainsi une force de poussée variable sur le dispositif de guidage de chaînes 90 pour tendre le train de chaînes 80 en fonction de l'angle machine AM. La force de poussée est réversible : une force peut être appliquée sur l'élément de transmission 12 ; 120 pour tendre le train de chaînes 80 par rotation de l'élément rotatif 13 ; 130 entrainé par l'actionneur 9. A l'inverse, l'élément rotatif 13 ; 130 peut être tourné par entrainement de l'élément de transmission 12 ; 120 du fait de la force de rappel exercée par les trains de chaînes 80 lorsque l'actionneur 9 n'est pas commandé ou que la commande est plus faible. Ainsi, la rotation de l'élément rotatif 13 ; 130 dans un sens de rotation (antihoraire dans l'exemple) augmente la tension du train de chaînes 80. La rotation de l'élément rotatif 13 ; 130 dans le sens contraire diminue la tension du train de chaînes (horaire dans l'exemple). L'élément rotatif 13 ; 130 peut être entrainé alternativement en rotation horaire ou antihoraire, pour osciller en synchronisme avec l'angle machine AM afin d'obtenir la variation de tension souhaitée du train de chaînes 80.

La variation de la tension des trains de chaînes 80 en fonction de l'angle machine AM permet d'adapter la compensation des vibrations des trains de chaînes 80 en fonction des besoins, et notamment en fonction des phases d'accélération et de décélérations des trains de chaînes 80, ce qui permet de limiter l'usure des trains de chaînes 80. Les phénomènes vibratoires au sein des trains de chaînes 80 varient fortement au cours d'un cycle machine. Ils sont quasiment nuls lorsque les trains de chaînes 80 sont arrêtés, puis augmentent fortement lorsque les trains de chaînes 80 accélèrent, puis décroissent, etc. Il est donc particulièrement avantageux que la force de poussée générée par le tendeur de chaînes 50 ; 500 varie en fonction de l'angle machine AM, lequel varie de 0° à 360° au cours d'un cycle machine.

La position angulaire de l'élément rotatif 13 ; 130 peut également être commandée par l'actionneur 9, en fonction de la cadence machine. En effet, les allongements des trains de chaînes 80 au cours des phases d'accélération et de décélération sont également dépendants de la cadence machine. La variation de la force de poussée exercée en fonction de la cadence machine permet de lutter efficacement contre les phénomènes vibratoires tout en limitant les contraintes sur les trains de chaînes 80. Ceci permet de ralentir fortement leur usure et d'augmenter sensiblement leur durée de vie.

On peut prévoir de commencer à commander la position angulaire de l'élément rotatif 13 ; 130 en synchronisme avec l'angle machine AM uniquement lorsque la cadence machine est supérieure à un seuil de cadence machine, telle qu'au-dessus de 5000f/h.

On prévoit par exemple deux tendeurs de chaînes similaires. Alternativement, un seul actionneur entraine simultanément deux éléments rotatifs 13 ; 130, un actionneur étant formé par exemple par un arbre moteur de l'autre actionneur.

Le support 11 peut être mobile en translation ou en pivotement.

Selon un exemple de réalisation, le support mobile comporte un chariot mobile en translation par rapport au bâti de la machine de traitement 1 ; 1', tel qu'un chariot à billes.

Selon un autre exemple de réalisation, le support mobile 11 comporte un balancier 17 mobile en pivotement par rapport au bâti de la machine de traitement 1 ; 1' et articulé avec le dispositif de guidage de chaînes 90.

Par exemple, le balancier 17 comporte une barrette 18 et une tête 19 fixée à la barrette 18, l'élément de transmission 12 étant monté rotatif dans une extrémité de la tête 19. La tête 19 est agencée sensiblement perpendiculairement à la barrette 18.

Le balancier 17 comporte en outre un pivot 20 fixé au bâti de la machine de traitement 1, 1' et sur lequel une première extrémité de la barrette 18 est montée pivotante. Le balancier 17 comporte en outre une rotule 21 coopérant d'une part avec le dispositif de guidage de chaînes 90 au niveau de l'axe de rotation de la poulie 91 et d'autre part avec une deuxième extrémité de la barrette 18. Les rotules 21 sont par exemple fixées aux extrémités de l'arbre transversal 94 supportant les poulies 91, du côté extérieur des poulies 91.

Ainsi, un pivotement du balancier 17 autour du pivot 20 permet de produire un déplacement quasiment longitudinal du dispositif de guidage de chaînes 90, c'est-à-dire des poulies 91 et des guides chaînes 92, 93. Ce déplacement peut en outre être guidé par des fourches de guidage 22 planes et horizontales, fixées au bâti. Les fourches de guidage 22 permettent que les dispositifs de guidage de chaînes 90 ne pivotent pas autour des rotules 21 mais que le déplacement soit le plus horizontal possible et seulement horizontal. Des butées 23a, 23b peuvent également être agencées en retrait des dispositifs de guidage des chaînes 90 pour bloquer la course de déplacement d dans la direction inverse à celle de déplacement des feuilles 10 en cas de problème.

Selon un premier exemple de réalisation représenté sur les figures 4, 5, 6a, 6b, 6c et 6d, l'élément de transmission est un galet de came 12 et l'élément rotatif est une came 13.

Le galet de came 12 est monté rotatif sur le support mobile 11.

La came 13 présente une surface de came 16 coopérant avec le galet de came 12.

La surface de came 16 présente une forme de volute dont le rayon augmente entre la première position angulaire extrémale (figure 6a) et la deuxième position angulaire extrémale (figure 6d).

Le couple moteur exercé permet d'assurer le contact entre la came 13 et le galet de came 12. La tension dans les chaines 80 provient du couple fourni par l'actionneur 9.

Le pivotement de la came 13 sur l'angle de fonctionnement β sur un cycle machine est par exemple compris entre 0 et 100°, tel que de l'ordre de 50° correspondant à une course de déplacement longitudinale du dispositif de guidage des chaînes 90 comprise entre 0 et 10 mm, tel que de l'ordre de 5 mm.

Pour s'assurer de la réversibilité de la force de poussée et pour permettre d'exercer une force de poussée horizontale sur le dispositif de guidage des chaînes 90 notamment avec un support mobile 11 pivotant, le galet de came 12 coopère avec la came 13 par exemple au niveau d'un point de contact localisé à l'avant de la came 13 dans le sens de déplacement des éléments en forme de feuilles 10, situé hors du plan horizontal passant par l'axe de rotation A1 de l'actionneur 9 (figure 4). Le point de contact est donc situé soit sur le quart avant supérieur de la came 13, soit sur le quart avant inférieur de la came 13. L'axe passant entre ce point de contact et l'axe de rotation A1 de l'actionneur 9 fait par exemple un angle d'environ 45° avec la verticale. On garantit ainsi la réversibilité du système. La force de rappel créée par la tension dans les chaînes 80 peut ainsi être capable de ramener la came 13 dans sa position initiale et donc de créer un couple sur celle-ci.

L'élément rotatif 13 est par exemple en prise directe avec un arbre moteur 15 de l'actionneur 9, c'est-à-dire sans réduction, embrayage ou autre entre les deux (figure 5). L'élément rotatif 13 en prise directe permet une meilleure maitrise de son positionnement angulaire. On améliore ainsi également la rigidité du système. De plus le tendeur de chaînes 50 ; 500 est plus simple à réaliser et moins encombrant.

L'actionneur 9 peut être électrique, pneumatique ou hydraulique. Il comporte par exemple un organe moteur, pouvant comporter un moteur 14, tel qu'électrique, pouvant être configuré pour être commandé en couple ou en position.

On commande par exemple le moteur 14 en appliquant une consigne de courant, permettant une commande en couple. Lorsque la consigne de couple est obtenue par le moteur 14, un équilibre est atteint entre la force exercée par le moteur 14 et la tension des trains de chaînes 80, permettant de garantir une force de tension dans les trains de chaînes 80. En effet, on veut contrôler une tension des trains de chaînes 80. Or un moteur commandé en déplacement nécessite une mesure de la tension du train de chaînes 80 et une régulation en boucle fermée pour s'assurer qu'une force suffisante est exercée dans les trains de chaînes 80. En revanche, une commande en courant, et donc en couple, est équivalente à une commande directe de la force appliquée par le moteur 14 et donc à une commande directe de la force de poussée dans les trains de chaînes 80. Par conséquent, en utilisant un moteur 14 commandé en courant, il n'est plus nécessaire de mesurer la tension du train de chaînes 80 et le moteur 14 peut être commandé en boucle ouverte.

On peut aussi prévoir que l'unité de contrôle 8 soit configurée pour définir le positionnement de l'angle de fonctionnement β de l'élément rotatif 13 à l'intérieur de la plage angulaire a, pour tenir compte de paramètres environnementaux des trains de chaînes 80. La portion de surface de came 16 utile peut ainsi être plus ou moins angulairement décalée, pour adapter le rayon de came aux conditions environnementales.

Le paramètre environnemental est par exemple la température, l'usure ou les tolérances de fabrication.

Par exemple, en référence aux figures 6a, 6b, 6c et 6d, la portion de la surface de came 16 coopérant avec le galet de came 12 pour des trains de chaînes 80 neufs sur l'angle de fonctionnement β d'un cycle machine entre une première position représentée en figure 6a et une deuxième position représentée en figure 6b, peut être angulairement décalée en fonction de l'usure des trains de chaînes 80, les trains de chaînes 80 usés étant plus distendus qu'à l'état neuf.

La portion de la surface de came 16 peut ainsi être décalée par exemple jusqu'au maximum comme représenté sur les figures 6c et 6d, la figure 6c correspondant à la première position, décalée par rapport à la figure 6a et la figure 6d correspondant à la deuxième position, décalée par rapport à la figure 6b. L'angle de fonctionnement β est d'autant plus décalé que les trains de chaînes 80 sont usés. Cela revient à ajouter un décalage de la consigne appliquée à l'actionneur 9. Sur la figure 6d, l'angle de fonctionnement β de la came 13 est décalé au maximum d'un angle φ (figure 6c), permettant d'obtenir une course d maximum du dispositif de guidage des chaînes 10 par exemple comprise entre 6mm et 10mm, tel que de l'ordre de 8mm.

Optionnellement, et comme on peut le voir sur les figures 4 et 9a, le tendeur de chaînes 50 ; 500 comprend également au moins un dispositif de rappel 65 configuré pour appliquer au dispositif de guidage de chaînes 90 une force de poussée sensiblement constante.

En effet il est toujours souhaitable de générer une force de poussée minimale dans les trains de chaînes 80. Cette force minimale permet par exemple de rattraper les jeux dus à l'usure ou à la dilatation des trains de chaînes 80. Dès lors, la présence d'un dispositif de rappel 65 générant une force de poussée sensiblement constante permet d'utiliser un actionneur 9 moins puissant et d'économiser l'énergie consommée par cet actionneur 9. De plus, en cas de panne de l'actionneur 9 ou de son circuit de commande ou en cas d'arrêt de l'actionneur 9, la machine 1,1' peut toujours être utilisée à cadence réduite, grâce à cette force de poussée minimale présente dans les trains de chaînes 80.

Il est aussi possible de commander la position angulaire de la came 13 dans une position désengagée du galet de came 12 pour appliquer au dispositif de guidage de chaînes 90 uniquement la force de poussée sensiblement constante du dispositif de rappel 65. Il suffit pour cela de tourner la came 13 jusqu'à ce que le galet 12 ne soit plus en contact avec celle-ci. On peut par exemple tourner la came 13 pour que la came 13 présente au galet 12 une zone 24 de rayon minimal ou tronquée de la came 13 (figure 4).

Le dispositif de rappel 65 comporte par exemple un ressort travaillant en compression. Une première extrémité du dispositif de rappel 65 est fixée au dispositif de guidage de chaines 90 et une deuxième extrémité du dispositif de rappel 65 est fixée au bâti de la machine 1, 1'.

On va maintenant décrire le fonctionnement d'un tendeur de chaînes 50 en référence aux figures 6a, 6b, 6c, 6d, 7 et 8.

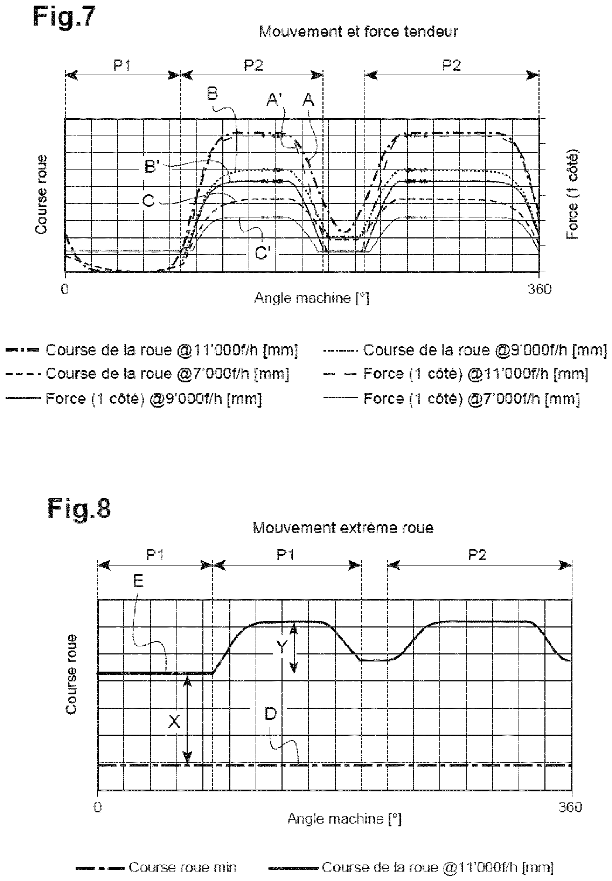

La figure 7 est un graphique montrant trois courbes (courbe A, B, C) de l'évolution de la course de déplacement d de la poulie 91 d'un dispositif de guidage de chaînes 90 (ordonnée de gauche) pour trois cadences machines différentes et trois courbes (courbes A', B', C') de l'évolution correspondante de la force de poussée (ordonnée de droite) au cours d'un cycle machine (l'angle machine AM est donc l'abscisse qui varie de 0° à 360°).

Les figures 6a et 6b illustrent un exemple sur lequel la came 13 coopère avec le galet de came 12 sur un angle de fonctionnement β entre une première position angulaire (figure 6a) et une deuxième position angulaire (figure 6b) au cours d'un cycle machine.

Dans la première position angulaire représentée sur la figure 6a, la coopération entre la came 13 et le galet de came 12 permet d'appliquer une force de poussée minimale à chaque dispositif de guidage de chaînes 90, produisant par exemple un déplacement nul du dispositif de guidage des chaînes 90 (courbes A, B, C, D, phase P1).

Dans la deuxième position angulaire représentée sur la figure 6b, le dispositif de guidage des chaînes 90 est déplacé sur une course d maximale de 5mm, permettant d'appliquer au dispositif de guidage de chaînes 90 une force de poussée maximale au cours du cycle machine, à chaque dispositif de guidage de chaînes 90 (phases P2 sur la figure 7).

On observe ainsi au cours d'un cycle machine deux principales phases de compensation P2 : une phase d'accélération en sortie de presse où les trains de chaînes 80 accélèrent pour transporter les éléments en forme de feuilles 10 jusqu'à atteindre une vitesse de transport maximale et une phase de décélération où les trains de chaînes 80 ralentissent de façon à stopper les barres de pinces 75 lorsque les éléments en forme de feuilles 10 sont correctement placés dans la station de travail suivante.

En commandant l'actionneur 9 en fonction de l'angle machine AM pour moduler le pivotement de la came 13, on peut donc contrôler la tension des trains de chaînes 80 en fonction de l'angle machine. Dans ce cas de figure, une force de poussée est produite lorsque les trains de chaînes 80 accélèrent ou décélèrent.

Les courbes B, B' montrent les évolutions du déplacement de la poulie 91 et de la force de poussée exercée pour une cadence machine de l'ordre de 9000f/h, inférieure à la cadence maximale de l'ordre de 11000f/h des courbes A, A'. Les courbes C, C' sont produites à une cadence machine de l'ordre de 7000f/h. On constate qu'au cours de la phase d'accélération P2, la course d et la force de poussée diminuent lorsque la cadence machine diminue.

Bien que la figure montre deux phases P2 pendant lesquelles une force de poussée maximale est appliquée, d'autres formes de courbes de mouvement sont possibles. Par exemple, les deux phases P2 peuvent être de différents niveaux et/ou peuvent être consécutives.

La figure 7 illustre ainsi la réduction très importante des contraintes exercées sur les trains de chaînes 80 en dehors des phases d'accélération et de décélération P2 ainsi que pour les cadences machines inférieures à la cadence machine maximale. Ce type de commande permet d'allonger fortement la durée de vie des trains de chaînes 80 en réduisant leur usure. Le tendeur de chaînes 50 ; 500 permet ainsi de garantir la précision du positionnement des barres de pinces 75 tout au long du cycle machine. Il est en outre plus robuste et plus compact que les systèmes à courroies de l'art antérieur.

Les figures 6c, 6d et la courbe E de la figure 8 illustrent un exemple pour lequel le positionnement de l'angle de fonctionnement β de la came 13 à l'intérieur de la plage angulaire α, a été décalé avec l'usure des trains de chaînes 80. La figure 8 représente des courses de déplacement de la poulie 91 en fonction de l'angle machine à cadence machine minimale pour des trains de chaînes 80 neufs (courbe D) et à cadence machine maximale pour des trains de chaînes 80 usés (courbe E). On distingue sur la courbe E, un offset X dû à l'usure et une « course dynamique » Y dûe à la cadence machine.

Dans la première position angulaire représentée sur la figure 6c, la coopération entre la came 13 et le galet de came 12 permet de déplacer le dispositif de guidage des chaînes 90 d'une course d minimum plus élevée, correspondant à un allongement des trains de chaînes 80 usés (offset X de la courbe E sur la figure 8).

Dans la deuxième position angulaire représentée sur la figure 6d, la came 13 a pivoté du même angle de fonctionnement β pour produire la même course d (offset X + course dynamique Y de la courbe E sur la figure 8).

Le tendeur de chaines 50 permet ainsi d'adapter la force de poussée appliquée au dispositif de guidage des chaînes 90 en fonction de l'angle machine, de la cadence machine et pour différentes usures machine.

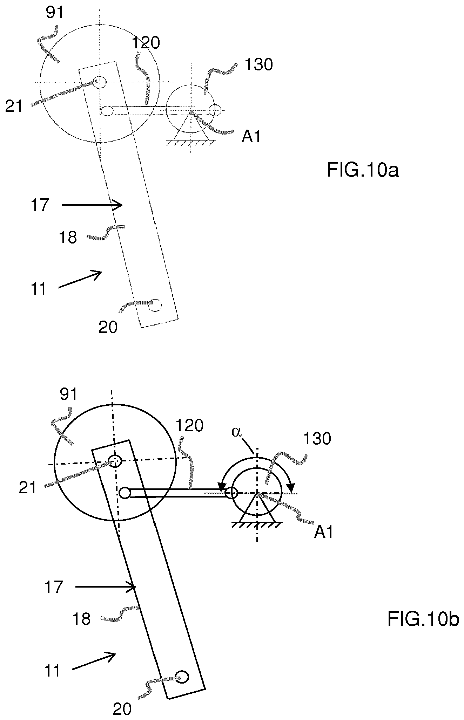

Selon un deuxième exemple de réalisation représenté sur les figures 9a, 9b, 10a et 10b, l'élément de transmission porté par le support mobile 11 est une bielle 120.

Une extrémité de la bielle 120 est montée pivotante sur le support mobile 11 et l'autre extrémité de la bielle 120 est montée pivotante sur l'élément rotatif 130.

Sur l'exemple des figures 9a, 9b, l'élément rotatif 130 est un excentrique, l'axe de rotation A1 ne passe pas par le centre. L'élément rotatif 130 est monté dans l'extrémité de la bielle 120 de sorte que la transmission mécanique soit de type « système à manivelle » transformant le mouvement de rotation en mouvement d'oscillation linéaire.

Sur l'exemple des figures 10a, 10b, l'axe de rotation A1 de l'élément rotatif 130 passe par le centre. L'extrémité de la bielle 120 est montée de façon excentrée sur l'élément rotatif 130, c'est-à-dire qu'elle est montée pivotante sur l'élément rotatif 130 en un point ne passant pas par le centre de l'élément rotatif 130.

Dans ces deux exemples, l'élément rotatif 130 peut être entrainé en rotation par l'actionneur 9 pour entrainer le déplacement du support mobile 11, l'élément rotatif 130 étant mobile en rotation sur une plage angulaire α inférieure à 360° entre une première position angulaire extrémale (figure 9a ; 10a) et une deuxième position angulaire extrémale (figure 9b ; 10b).

La tension du train de chaînes 80 est minimale pour la première position angulaire extrémale (figure 9a; 10a) et, est maximale pour la deuxième position angulaire extrémale (figure 9b ; 10b), l'actionneur 9 étant piloté en synchronisme avec l'angle machine AM.

Le fonctionnement est le même que pour le système came-galet de came. Toutefois, avec ce deuxième mode de réalisation, il n'est pas possible de désengager la transmission. Il peut toutefois être possible d'appliquer au dispositif de guidage de chaînes 90 uniquement la force de poussée sensiblement constante du dispositif de rappel 65 en laissant libre l'actionneur 9.

## Revendications

1. Tendeur de chaînes (50 ; 500) pour dispositif de transport (70) de machine de traitement (1 ; 1') d'éléments en forme de feuilles (10), ledit dispositif de transport (70) comprenant deux trains de chaînes (80) latéraux reliés aux extrémités d'une pluralité de barres de pinces (75) transversales aptes à saisir les éléments en forme de feuilles (10) et au moins un dispositif de guidage de chaînes (90) configuré pour guider un train de chaînes (80) respectif, ledit tendeur de chaînes (50 ; 500) comportant :
- un support mobile (11), et
- un actionneur (9) configuré pour être piloté par une unité de contrôle (8) de la machine de traitement (1 ; 1'), ledit actionneur (9) étant piloté en synchronisme avec l'angle machine (AM), **caractérisé en ce que** le tendeur de chaînes (50 ; 500) comporte en outre :
- un élément de transmission (12 ; 120), porté par le support mobile (11),
- un élément rotatif (13; 130) configuré pour être entrainé en rotation par l'actionneur (9) et pour coopérer avec l'élément de transmission (12 ; 120) pour exercer une force de poussée sur le support mobile (11), l'élément rotatif (13 ; 130) étant mobile en rotation sur une plage angulaire (α) inférieure à 360° entre une première position angulaire extrémale et une deuxième position angulaire extrémale, la tension du train de chaînes (80) étant minimale pour la première position angulaire extrémale et maximale pour la deuxième position angulaire extrémale.

2. Tendeur de chaînes (50) selon la revendication précédente, **caractérisé en ce que** l'élément de transmission est un galet de came (12) monté rotatif sur le support mobile (11) et l'élément rotatif est une came (13), la came (13) présentant une surface de came (16) configurée pour coopérer avec le galet de came (12), la surface de came (16) présentant une forme de volute dont le rayon augmente entre la première position angulaire extrémale et la deuxième position angulaire extrémale.

3. Tendeur de chaînes (500) selon la revendication 1, **caractérisé en ce que** l'élément de transmission porté par le support mobile (11) est une bielle (120), une extrémité de la bielle (120) étant montée pivotante sur le support mobile (11) et l'autre extrémité de la bielle (120) étant montée pivotante sur l'élément rotatif (130).

4. Tendeur de chaînes (50 ; 500) selon l'une des revendications précédentes, **caractérisé en ce que** la position angulaire de l'élément rotatif (13; 130) est contrôlée également en fonction de la cadence machine.

5. Tendeur de chaînes (50 ; 500) selon l'une des revendications précédentes, **caractérisé en ce que** l'unité de contrôle (8) est configurée pour définir le positionnement d'un angle de fonctionnement (β) à l'intérieur de la plage angulaire (α) pour tenir compte de paramètres environnementaux des trains de chaînes (80).

6. Tendeur de chaînes (50 ; 500) selon l'une des revendications précédentes, **caractérisé en ce que** l'élément rotatif (13; 130) est en prise directe avec un arbre moteur (15) de l'actionneur (9).

7. Tendeur de chaînes (50 ; 500) selon l'une des revendications précédentes, **caractérisé en ce qu'**un angle de fonctionnement (β) de l'élément rotatif (13 ; 130) sur lequel l'élément rotatif (13 ; 130) coopère avec l'élément de transmission (12 ; 120) sur un cycle machine est supérieur à 0° et inférieur à 100°.

8. Tendeur de chaînes (50 ; 500) selon l'une des revendications précédentes, **caractérisé en ce que** le support mobile (11) comporte un balancier (17) mobile en pivotement, configuré pour s'articuler avec le dispositif de guidage de chaînes (90).

9. Tendeur de chaînes (50 ; 500) selon la revendication précédente, **caractérisé en ce que** le balancier (17) comporte :
- une barrette (18),
- un pivot (20) configuré pour être fixé à un bâti de la machine de traitement (1 ; 1') et sur lequel est monté une première extrémité de la barrette (18),
- une rotule (21) configurée pour coopérer avec le dispositif de guidage de chaînes (90) et une deuxième extrémité de la barrette (18),
- une tête (19) fixée à la barrette (18), l'élément de transmission (12 ; 120) étant monté mobile dans une extrémité de la tête (19).

10. Tendeur de chaînes (50 ; 500) selon l'une des revendications 1 à 7, **caractérisé en ce que** le support mobile comporte un chariot mobile en translation.

11. Tendeur de chaînes (50 ; 500) selon l'une des revendications précédentes, **caractérisé en ce que** le tendeur de chaînes (50 ; 500) comprend également au moins un dispositif de rappel (65) configuré pour appliquer au dispositif de guidage de chaînes (90) une force de poussée sensiblement constante.

12. Machine de traitement (1 ; 1') d'éléments en forme de feuilles (10), comprenant
- une pluralité de stations de travail (100, 200, 300, 400, 500),
- un dispositif de transport (70) pour transporter chaque feuille (10) successivement dans différentes stations de travail (300, 400, 500), ledit dispositif de transport (70) comprenant :
- une pluralité de barres de pinces (75) transversales, aptes à saisir les feuilles (10) par leurs bords frontaux,
- un premier et un deuxième trains de chaînes (80) latéraux reliés aux extrémités des barres de pinces (75),
- au moins un dispositif de guidage de chaînes (90) configuré pour guider un train de chaînes (80) respectif,
**caractérisée en ce que** la machine de traitement (1 ; 1') comporte au moins un tendeur de chaînes (50 ; 500) selon l'une des revendications précédentes configuré pour tendre au moins un train de chaînes (80).

13. Machine de traitement (1 ; 1') selon la revendication précédente, **caractérisée en ce qu'**elle comporte deux tendeurs de chaînes (50 ; 500) pour tendre un train de chaînes (80) respectif.

14. Procédé pour tendre les trains de chaînes (80) d'un dispositif de transport (70) d'une machine de traitement (1 ; 1') d'éléments en forme de feuilles (10) par au moins un tendeur de chaînes (50 ; 500) selon l'une des revendications 1 à 11, dans lequel on commande la position angulaire de l'élément rotatif (13 ; 130) en synchronisme avec l'angle machine (AM), la rotation dans un sens de l'élément rotatif (13 ; 130) augmentant la tension du train de chaînes (80) et la rotation dans le sens de rotation contraire de l'élément rotatif(13 ; 130) diminuant la tension du train de chaînes (80).

15. Procédé selon la revendication précédente, **caractérisé en ce qu'**on commande un moteur (14) de l'actionneur (9) en courant ou en position.

16. Procédé selon l'une des revendications 14 ou 15, **caractérisé en ce qu'**on commande l'actionneur (9) également en fonction de la cadence machine.

17. Procédé selon l'une des revendications 14 à 16, **caractérisé en ce que** le positionnement d'un angle de fonctionnement (α) à l'intérieur de la plage angulaire (α) est défini pour tenir compte de paramètres environnementaux des trains de chaînes (80).

18. Procédé selon l'une des revendications 14 à 17, **caractérisé en ce qu'**on commence à commander la position angulaire de l'élément rotatif (13 ; 130) en synchronisme avec l'angle machine (AM) uniquement lorsque la cadence machine est supérieure à un seuil de cadence machine.

19. Procédé selon l'une des revendications 14 à 18, pour **caractérisé en ce qu'**on commande la position angulaire de l'élément rotatif (13) dans une position désengagée de l'élément de transmission (12) pour appliquer uniquement au dispositif de guidage de chaînes (90) une force de poussée sensiblement constante d'un dispositif de rappel (65).

## Patentansprüche

1. Kettenspanner (50; 500) für eine Fördervorrichtung (70) einer Maschine zum Bearbeiten (1; 1') von blattförmigen Elementen (10), wobei die Fördervorrichtung (70) zwei seitliche Kettenstränge (80), die mit den Enden einer Mehrzahl von querverlaufenden Greiferschienen (75) verbunden sind, die zum Greifen der blattförmigen Elemente (10) geeignet sind, und mindestens eine Kettenführungsvorrichtung (90), die zum Führen eines jeweiligen Kettenstrangs (80) ausgebildet ist, umfasst, wobei der Kettenspanner (50; 500) Folgendes umfasst:
- eine bewegliche Halterung (11), und
- ein Stellglied (9), das dazu ausgelegt ist, von einer Steuereinheit (8) der Bearbeitungsmaschine (1; 1') gesteuert zu werden, wobei das Stellglied (9) synchron mit dem Maschinenwinkel (AM) gesteuert wird,
**dadurch gekennzeichnet, dass** der Kettenspanner (50; 500) ferner umfasst:
- ein Übertragungselement (12; 120), das von der beweglichen Halterung (11) getragen wird,
- ein drehbares Element (13; 130), das dazu ausgelegt ist, durch das Stellglied (9) gedreht zu werden und mit dem Übertragungselement (12; 120) zusammenzuwirken, um eine Schubkraft auf die bewegliche Halterung (11) auszuüben, wobei das drehbare Element (13; 130) um einen Winkelbereich (α) von weniger als 360° zwischen einer ersten Endwinkelposition und einer zweiten Endwinkelposition gedreht wird, wobei die Spannung des Kettenstrangs (80) für die erste Endwinkelposition minimal und für die zweite Endwinkelposition maximal ist.

2. Kettenspanner (50) nach dem vorstehenden Anspruch, **dadurch gekennzeichnet, dass** es sich bei dem Übertragungselement um eine drehbar auf der beweglichen Halterung (11) gelagerte Nockenrolle (12) und bei dem drehbaren Element um einen Nocken (13) handelt, wobei der Nocken (13) eine Nockenfläche (16) aufweist, die dazu ausgelegt ist, mit der Nockenrolle (12) zusammenzuwirken, wobei die Nockenfläche (16) eine Spiralform aufweist, deren Radius zwischen der ersten Endwinkelposition und der zweiten Endwinkelposition zunimmt.

3. Kettenspanner (500) nach Anspruch 1, **dadurch gekennzeichnet, dass** es sich bei dem von der beweglichen Halterung (11) getragenen Übertragungselement um eine Pleuelstange (120) handelt, wobei ein Ende der Pleuelstange (120) schwenkbar an der beweglichen Halterung (11) und das andere Ende der Pleuelstange (120) schwenkbar an dem drehbaren Element (130) gelagert ist.

4. Kettenspanner (50; 500) nach einem der vorstehenden Ansprüche, **dadurch gekennzeichnet, dass** die Winkelposition des drehbaren Elements (13; 130) auch in Abhängigkeit von der Maschinengeschwindigkeit gesteuert wird.

5. Kettenspanner (50; 500) nach einem der vorstehenden Ansprüche, **dadurch gekennzeichnet, dass** die Steuereinheit (8) dazu ausgelegt ist, die Positionierung eines Arbeitswinkels (β) innerhalb des Winkelbereichs (α) zu definieren, um Umgebungsparameter der Kettenstränge (80) zu berücksichtigen.

6. Kettenspanner (50; 500) nach einem der vorstehenden Ansprüche, **dadurch gekennzeichnet, dass** das drehbare Element (13; 130) in direktem Eingriff mit einer Motorwelle (15) des Stellglieds (9) steht.

7. Kettenspanner (50; 500) nach einem der vorstehenden Ansprüche, **dadurch gekennzeichnet, dass** ein Arbeitswinkel (β) des drehbaren Elements (13; 130), bei dem das drehbare Element (13; 130) mit dem Übertragungselement (12; 120) bei einem Maschinenzyklus zusammenwirkt, größer als 0° und kleiner als 100° ist.

8. Kettenspanner (50; 500) nach einem der vorstehenden Ansprüche, **dadurch gekennzeichnet, dass** die bewegliche Halterung (11) ein schwenkbar bewegliches Pendel (17) umfasst, das dazu ausgelegt ist, an die Kettenführungsvorrichtung (90) angelenkt zu werden.

9. Kettenspanner (50; 500) nach dem vorherigen Anspruch, **dadurch gekennzeichnet, dass** das Pendel (17) umfasst:
- eine Stange (18),
- einen Drehzapfen (20), der dazu ausgelegt ist, an einem Rahmen der Bearbeitungsmaschine (1; 1') befestigt zu werden, und an dem ein erstes Ende der Stange (18) montiert ist,
- ein Kugelgelenk (21), das dazu ausgelegt ist, mit der Kettenführungsvorrichtung (90) und einem zweiten Ende der Stange (18) zusammenzuwirken,
- einen Kopf (19), der an der Stange (18) befestigt ist, wobei das Übertragungselement (12; 120) beweglich in einem Ende des Kopfes (19) montiert ist.

10. Kettenspanner (50; 500) nach einem der Ansprüche 1 bis 7, **dadurch gekennzeichnet, dass** die bewegliche Halterung einen verschiebbaren Schlitten umfasst.

11. Kettenspanner (50; 500) nach einem der vorstehenden Ansprüche, **dadurch gekennzeichnet, dass** der Kettenspanner (50; 500) auch mindestens eine Rückholvorrichtung (65) umfasst, die dazu ausgelegt ist, eine im Wesentlichen konstante Schubkraft auf die Kettenführungsvorrichtung (90) auszuüben.

12. Maschine zum Bearbeiten (1; 1') von blattförmigen Elementen (10), umfassend
- eine Mehrzahl von Arbeitsstationen (100, 200, 300, 400, 500),
- eine Fördervorrichtung (70) zum aufeinanderfolgenden Fördern jedes Blatts (10) zu verschiedenen Arbeitsstationen (300, 400, 500), wobei die Fördervorrichtung (70) umfasst:
- eine Mehrzahl von querverlaufenden Greiferschienen (75), die geeignet sind, die Blätter (10) an ihren Vorderkanten zu greifen,
- einen ersten und einen zweiten seitlichen Kettenstrang (80), welche mit den Enden der Greiferschienen (75) verbunden sind,
- mindestens eine Kettenführungsvorrichtung (90), die dazu ausgelegt ist, einen jeweiligen Kettenstrang (80) zu führen,
**dadurch gekennzeichnet, dass** die Bearbeitungsmaschine (1; 1') mindestens einen Kettenspanner (50; 500) nach einem der vorhergehenden Ansprüche umfasst, der dazu ausgelegt ist, mindestens einen Kettenstrang (80) zu spannen.

13. Bearbeitungsmaschine (1; 1') nach dem vorstehenden Anspruch, **dadurch gekennzeichnet, dass** sie zwei Kettenspanner (50; 500) zum Spannen eines jeweiligen Kettenstrangs (80) umfasst.

14. Verfahren zum Spannen der Kettenstränge (80) einer Fördervorrichtung (70) einer Maschine zum Bearbeiten (1; 1') von blattförmigen Elementen (10) durch mindestens einen Kettenspanner (50; 500) nach einem der Ansprüche 1 bis 11, wobei die Winkelposition des drehbaren Elements (13; 130) synchron zum Maschinenwinkel (AM) gesteuert wird, wobei die Drehung in einer Richtung des drehbaren Elements (13; 130) die Spannung des Kettenstrangs (80) erhöht und die Drehung des drehbaren Elements (13; 130) in der entgegengesetzten Drehrichtung die Spannung des Kettenstrangs (80) verringert.

15. Verfahren nach dem vorstehenden Anspruch, **dadurch gekennzeichnet, dass** ein Motor (14) des Stellglieds (9) strom- oder positionsabhängig gesteuert wird.

16. Verfahren nach einem der Ansprüche 14 oder 15, **dadurch gekennzeichnet, dass** das Stellglied (9) auch in Abhängigkeit von der Maschinengeschwindigkeit gesteuert wird.

17. Verfahren nach einem der Ansprüche 14 bis 16, **dadurch gekennzeichnet, dass** die Positionierung eines Arbeitswinkels (α) innerhalb des Winkelbereichs (α) definiert ist, um Umgebungsparameter der Kettenstränge (80) zu berücksichtigen.

18. Verfahren nach einem der Ansprüche 14 bis 17, **dadurch gekennzeichnet, dass** die Winkelposition des drehbaren Elements (13; 130) erst dann synchron mit dem Maschinenwinkel (AM) gesteuert wird, wenn der Maschinentakt eine Maschinentaktschwelle übersteigt.

19. Verfahren nach einem der Ansprüche 14 bis 18, **dadurch gekennzeichnet, dass** die Winkelposition des drehbaren Elements (13) in einer vom Übertragungselement (12) gelösten Position gesteuert wird, um nur auf die Kettenführungsvorrichtung (90) eine im Wesentlichen konstante Schubkraft einer Rückholvorrichtung (65) aufzubringen.

## Claims

1. Chain tensioner (50; 500) for a conveying device (70) of a processing machine (1; 1') of elements in the form of sheets (10), said conveying device (70) comprising two lateral chain sets (80) connected to the ends of a plurality of transverse gripper bars (75), the grippers being capable of grasping the elements in the form of sheets (10) and at least one chain-guiding device (90) configured to guide a respective chain set (80), said chain tensioner (50; 500) containing:
- a movable support (11), and
- an actuator (9) configured to be controlled by a control unit (8) of the processing machine (1; 1'), said actuator (9) being controlled in synchronism with the machine angle (MA),
**characterised in that** the chain tensioner (50; 500) further contains:
- a transmission element (12; 120) borne by the movable support (11),
- a rotary element (13; 130) configured to be rotated by the actuator (9) and to cooperate with the transmission element (12; 120) in order to exert a thrust force on the movable support (11), the rotary element (13; 130) being rotatable over an angular range (α) of less than 360° between a first extreme angular position and a second extreme angular position, the tension of the chain set (80) being minimal for the first extreme angular position and maximal for the second extreme angular position.

2. Chain tensioner (50) according to the preceding claim, **characterised in that** the transmission element is a cam roller (12) mounted rotatably on the movable support (11) and the rotary element is a cam (13), the cam (13) having a cam surface (16) configured to cooperate with the cam roller (12), the cam surface (16) having a volute shape, the radius of which increases between the first extreme angular position and the second extreme angular position.

3. Chain tensioner (500) according to claim 1, **characterised in that** the transmission element borne by the movable support (11) is a rod (120), one end of the rod (120) being mounted pivotably on the movable support (11) and the other end of the rod (120) being mounted pivotably on the rotary element (130).

4. Chain tensioner (50; 500) according to any of the preceding claims, **characterised in that** the angular position of the rotary element (13; 130) is also controlled as a function of the machine production rate.

5. Chain tensioner (50; 500) according to any of the preceding claims, **characterised in that** the control unit (8) is configured to define the position of an operating angle (β) within the angular range (α) in order to take account of environmental parameters of the chain sets (80).

6. Chain tensioner (50; 500) according to any of the preceding claims, **characterised in that** the rotary element (13; 130) is in direct engagement with a drive shaft (15) of the actuator (9).

7. Chain tensioner (50; 500) according to any of the preceding claims, **characterised in that** an operating angle (β) of the rotary element (13; 130) over which the rotary element (13; 130) cooperates with the transmission element (12; 120) over a machine cycle is greater than 0° and less than 100°.

8. Chain tensioner (50; 500) according to any of the preceding claims, **characterised in that** the movable support (11) contains a pivotable rocker (17) configured to be articulated with the chain-guiding device (90).

9. Chain tensioner (50; 500) according to the preceding claim, **characterised in that** the rocker (17) contains:
- a bar (18),
- a pivot (20) configured to be attached to a frame of the processing machine (1; 1') and on which a first end of the bar (18) is mounted,
- a ball joint (21) configured to cooperate with the chain-guiding device (90) and with a second end of the bar (18),
- a head (19) attached to the bar (18), the transmission element (12; 120) being mounted movably in one end of the head (19).

10. Chain tensioner (50; 500) according to any of claims 1 to 7, **characterised in that** the movable support contains a translationally movable carriage.

11. Chain tensioner (50; 500) according to any of the preceding claims, **characterised in that** the chain tensioner (50; 500) also comprises at least one return device (65) configured to apply a substantially constant thrust force to the chain-guiding device (90).

12. Processing machine (1; 1') of elements in the form of sheets (10), comprising
- a plurality of workstations (100, 200, 300, 400, 500),
- a conveying device (70) for conveying each sheet (10) successively through various workstations (300, 400, 500), said conveying device (70) comprising:
- a plurality of transverse gripper bars (75), the grippers being capable of grasping the sheets (10) by their front edges,
- a first and a second lateral chain set (80) connected to the ends of the gripper bars (75),
- at least one chain-guiding device (90) configured to guide a respective chain set (80),
**characterised in that** the processing machine (1; 1') contains at least one chain tensioner (50; 500) according to any of the preceding claims, said chain tensioner being configured to tension at least one chain set (80).

13. Processing machine (1; 1') according to the preceding claim, **characterised in that** it contains two chain tensioners (50; 500) for tensioning a respective chain set (80).

14. Method for tensioning the chain sets (80) of a conveying device (70) of a processing machine (1; 1') of elements in the form of sheets (10) by action of at least one chain tensioner (50; 500) according to any of claims 1 to 11, wherein the angular position of the rotary element (13; 130) is controlled in synchronism with the machine angle (MA), the rotation of the rotary element (13; 130) in one direction increasing the tension of the chain set (80), and the rotation of the rotary element (13; 130) in the opposite direction of rotation decreasing the tension of the chain set (80).

15. Method according to the preceding claim, **characterised in that** a motor (14) of the actuator (9) is controlled in terms of current or position.

16. Method according to any of claims 14 or 15, **characterised in that** the actuator (9) is also controlled as a function of the machine production rate.

17. Method according to any of claims 14 to 16, **characterised in that** the position of an operating angle (α) within the angular range (α) is defined in order to take account of environmental parameters of the chain sets (80).

18. Method according to any of claims 14 to 17, **characterised in that** control of the angular position of the rotary element (13; 130) in synchronism with the machine angle (MA) is started only when the machine production rate is above a machine production rate threshold.

19. Method according to any of claims 14 to 18, **characterised in that** the angular position of the rotary element (13) in a disengaged position of the transmission element (12) is controlled in order to apply a substantially constant thrust force of a return device (65) only to the chain-guiding device (90).
